# EUROPEAN PATENT SPECIFICATION

(11) **EP 0 493 357 B1**
(45) Date of publication and mention of the grant of the patent: **15.02.1995**
(21) Application number: 91870213.5
(22) Date of filing: 19.12.1991
(51) Int. Cl.: B09B 3/00, C02F 1/26, C02F 11/00

(54) **Method for physico-chemically purifying contaminated sediments**
Verfahren zum physisch-chemischen Reinigen von kontaminierten Sedimenten
Procédé pour le nettoyage physico-chimique de sediments contaminés

(30) Priority: 21.12.1990 BE 9001236
(43) Date of publication of application: 01.07.1992
(73) Proprietor: SILT N.V., B-2070 Zwijndrecht (BE)
(72) Inventor: Goemaere, Inge, B-9270 Kalken (BE); De Proost, Victor, B-2650 Edegem (BE); D'Heane, Siegfried, B-9860 Landskouter (BE)
(74) Representative: Pieraerts, Jacques

(56) References cited:
- EP-A- 0 072 885
- EP-A- 0 161 698
- EP-A- 0 325 159
- EP-A- 0 347 965
- WO-A-88/02285
- WO-A-89/05778
- US-A- 4 336 136
- 'Handboek bodemsaneringstechnieken' May 1988 , STAATSUITGEVERIJ , THE HAGUE NL

## Description

The invention relates to a method for physico-chemically purifying contaminated sediments of a fine texture, such as dredgings and soils of the texture classes loamy sand (S), sandy loam (P), loam (L) and silt (A), wherein
- a mixture is made of said contaminated sediment in water, the pH of which being adjusted to such a pH-value that said water forms an extractant for contaminants present in the sediment ;
- said contaminants are extracted by means of this extractant out of the sediment ; and
- the sediment is removed and the remaining aqueous phase containing the extracted contaminants is separated in a first fraction containing substantially no contaminants and a second fraction containing extracted contaminants.

Such a method is known from EP-B1-0072885. In this known method, heavy metals are extracted from contaminated sludge by means of acid water having a pH lower than 1. After this extraction, the completely or partially purified sludge is separated. Then, the pH of the remaining aqueous phase is raised to 10 by adding a base in order to precipitate the extracted heavy metals. These precipitated heavy metals form the hereabove mentioned second fraction which is removed. Further, CO₂-gas is guided through the remaining first fraction, most of the heavy metals of which have already been removed by precipitation, in order to precipitate the remaining traces of heavy metals such as cadmium as carbonates in order that this first fraction should be sufficiently purified so that it may be discharged.

A drawback of this known method consists in that a large pH change is necessary to dissolve first the heavy metals and to precipitate them back. Consequently, a relatively large amount of base is necessary for this pH change which increases the costs of the purification.

A further drawback of the known method is that due to the high pH, said first fraction cannot be discharged as such but has to be neutralised first by means of an acid. This acid increases also the purification costs. The produced salt forms an additional contamination of the waste water to be discharged.

The application of such known extraction techniques is moreover limited in practice, as mentioned on page 11 of the "Handboek Bodemsaneringstechnieken", edition 2, May 1988, Staatuitgeverij (The Hague, Netherlands), by the percentage of the fine mineral fraction and the organic fraction in the sediment.

In practice, it has already appeared to be feasible to purify coarse grained sediments, having a silt content of upto 30 % by weight at the most, with a sufficient efficiency for example by means of the technique described in EP-A-0161698, wherein use is made of a "scrubber" to release the contaminants by mutual friction of the particles. Sediments having a higher silt content cannot be purified in this way a.o. since, as it is also mentioned on page 11 of the "Handboek Bodemsaneringstechnieken", this fine fraction arrives together with the organic fraction and the contaminants in the sludge residue which has still to be dumped nowadays on a suitable dumping site.

An object of the invention is now to provide a method for purifying contaminated sediments which provides a solution for the hereabove mentioned drawbacks and which allows, in particular, to obtain also a sufficient removal efficiency for fine grained sediments having a higher silt content and which allows further to limit the acid and/or base amounts required for this purification.

To this end, said mixture of sediment in water has a dry matter content of 5 to 20 % by weight and preferably a dry matter content of about 10 % by weight and the separation in said first and second fraction is performed by membrane separation wherein use is made of a membrane which is permeable for said extractant but substantially impervious for said contaminants.

Due to the relatively low dry matter content in the extraction phase, a sufficiently high removal efficiency can be obtained, even for sediments having a high silt content. The invention enables the use of such a low dry matter content or in other words of a high amount of extractants in practice by the combination with the use of membrane separation for the separation of the remaining aqueous phase. Indeed, in the method according to the invention, the separation between said first and second fraction is not based on a pH change but this separation is performed in a physical way. Said first fraction is recycled hereby again as extractant. When this first fraction is reused as extractant, a smaller amount of acid or base has to be added in order to obtain the desired pH for the extraction. However, this is not the case when, as in the hereabove mentioned known method, an alkaline precipitation reaction is used for separating the heavy metals since an additional acid amount would further be required due to the high pH of the first fraction. Besides, the salt content of the first fraction would increase too strongly and would therefore have a negative effect on the extraction.

Although page 11 of the "Handboek Bodemsaneringstechnieken" mentions, beside the hereabove indicated problems of the extractive purification, also the possibility to purify the process water possibly by membrane techniques, there is nowhere mentioned nor suggested to combine these membrane techniques with the use of a low dry matter content during the extraction and with the reuse of the extractant, in spite of the fact that this combination according to the invention offers a solution which is in practice especially suited for purifying sediments having a high percentage of fine mineral fraction. According to this reference book, extractive purification methods are on the contrary not suited for sediments having a high percentage of fine mineral fraction.

In a preferred embodiment of the method according to the invention, the sediment to be purified is sieved so as to remove coarse sand and coarser particles which may be present, with particles having a diameter larger than 125 »m being removed in particular by sieving.

In this way, there is prevented that the coarse sand grains would damage apparatusses, such as centrifuges, possibly used in the purification method. The separated coarse fraction can be purified by means of the known techniques. Preferably, said water is at least partially added to the sediment during the sieving operation so that this sieving goes on more easily.

In a particular embodiment of the method according to the invention, the pH of said water is adjusted to a pH lower than 2, and preferably to a pH situated between 0.5 and 1, so that a good extraction is obtained for most of the heavy metals.

Preferably, the pH of the mixture of the sediment and the extractant is raised, after the extraction, to a pH situated between 2 and 4, and preferably to a pH of about 2.5.

In a further particular embodiment of the method according to the invention, the pH of said mixture is adjusted to a pH higher than 10, and preferably to a pH of about 11, by adding a base. At this pH, certain heavy metals such as zinc and arsenicum, in particular heavy metals forming amphoteric hydroxides, and at the same time also other contaminants such as cyanides, become dissolved.

In a preferably applied embodiment of the method according to the invention, steam is injected into the mixture of the sediment and the water added thereto, and/or oxidants are added to this mixture before the extraction, preferably in the first compartment of a multi step extractor, in order to oxidize hydrocarbons.

Other particularities and advantages of the invention will become apparent from the following description of a method for physico-chemically purifying contaminant sediments. This description is only given by way of example and does not limit the scope of the invention.

In the method according to the invention, water, (for example recycled extractant containing already an acid or a base) is added to the sediment to be purified, such as soil and dredgings which are for example contaminated with heavy metals and possibily with hydrocarbons, and the sediment is mixed in this water. The pH of the mixture of sediment and water is adjusted in such a manner by adding an acid or a base that this water forms an extractant for contaminants present in the sediment. These contaminants are then extracted from the sediment by means of this extractant. Then, the purified sediment is separated and is possibly also washed further, and the remaining aqueous phase, containing the extracted contaminants, is separated in a first fraction, containing substantially no contaminants, and a second concentrated fraction containing the extracted contaminants.

According to the invention, the separation in said first and second fraction is performed by membrane separation. Use is made herefor of a membrane which is permeable for said extractant but which is substantially impervious for said contaminants, for example for heavy metals. Such membrane separators are known per se and no further detailed description will be given hereinafter. The working of these membrane separators is based on reverse osmosis. The remaining aqueous phase containing the extracted contaminants is supplied under pressure on one side of the membrane. While this aqueous phase, which is supplied under pressure, is guided continuously along the usually cylindrically coiled membrane, a portion of the extractant penetrates against the osomotic pressure through the membrane and is removed on the other side of this membrane. The extractant forced through the membrane constitutes the first fraction, whereas the aqueous phase guided along the membrane, and from which a portion of the extractant is withdrawn, constitutes the second fraction.

The second fraction containing the extracted contaminants, contains for example 10 to 15 % dry matter and is preferably processed further to a solid product which is in this way suited to be dumped. To this end, this second fraction can be evaporated or concentrated by means of filter presses, possibly after flocculation.

The first fraction is preferably added again to the contaminated sediments and is thus reused as extractant. In this way, a smaller amount of acid or base is required to realize the pH adjustment required for the extraction. Reusing the first fraction offers moreover the advantage that a smaller amount of waste water is produced.

In the method according to the invention said water, possibly comprising the recycled first fraction is added, before the extraction, until a dry matter content of 5 to 20 % by weight is reached, and preferably until a dry matter content of about 10 % by weight is reached. A low dry matter content during the extraction increases the extraction efficiency, or in other words the amount of contaminants which are extracted from the sediment, expressed for example as a percentage of the total amount of adsorbed contaminants, so that substantially all kinds of fine grained soils and dredgings can be purified by mixing the sediment intensively with the extractant or in other words by creating a sufficient turbulence. It was found that soils of the texture classes S (loamy sand), P (sandy loam), L (loam) and even A (silt) can be purified in this way.

In order to extract certain contaminants such as the heavy metals with an amphoteric character, such as for example zinc, arsenicum and chromium, and other contaminants such as cyanides in a sufficient degree from the sediment, the pH of the mixture of the sediment and said water is adjusted in a particular embodiment by adding a base to a pH higher than 10, and preferably to a pH of about 11. A suitable base herefor is for example potassium hydroxide. In the case of these high pH values, the extractant can be recycled without pH adjustement by means of the membrane separator.

In another particular embodiment of the method according to the invention, the pH of said mixture is adjusted to a pH lower than 2, and preferably to a pH situated between 0.5 and 1, by adding an acid before or during the extraction. When use is made of a sufficient amount of water, as described herein before, it is possible to extract most of the heavy metals at these low pH values, even from sediments of a fine texture such as silt soils and dredgings, by mixing the sediment sufficiently intensively with the extractant.

Preferably, the extraction is performed by means of a multi step extractor comprising at least two and preferably three or more compartments. The use of a multi step extractor provides a high flexibility with respect to the purification steps which can be applied. It enables for example to perform said pH adjustment in two or possibly more steps and this each time in a compartment of the multi step extractor. In the first step, the pH is for example adjusted to 3 so that most of the heavy metals become already dissolved whereas in the second step the pH is further reduced to pH 1 in order to remove also heavy metals which are more difficult to extract from the sediment.

In each of the compartments of the multi step extractor is created a turbulence, for example by mixing intensively by means of mixers. In a preferred embodiment of the invention, use is made of a three step extractor. In the last two compartments, the hereabove mentioned pH adjustment is performed in two steps. The first compartment is used to eliminate organic contaminants. These organic contaminants are for example oxidized in this first compartment by intensive aeration and/or by adding oxidants. Organic contaminants can possibly also be removed by a so-called "steam stripping" wherein steam is injected so that volatile compounds are evaporated. In order to enhance the extraction of organic contaminants to the water, surfactants can be added.

In a preferred embodiment of the invention, a portion of the organic contaminants is already removed before the extraction in the multi step extractor. After mixing the sediment with the water, for example with the recycled first fraction, this mixture is pumped hereto in an aerated oil separator wherein oily substances are forced to the water surface and are scraped off there. Then, the mixture is pumped into a buffer tank wherein the mixture is aerated intensely so that a first oxidation of hydrocarbons takes already place and so that smell troubles are avoided. The mixture is pumped from this buffer tank into the first compartment of the multi step extractor. Additional water, in particular recycled first fraction, can be added further in the buffer tank in order to obtain the desired dry matter content.

After the extraction the purified sediment is separated from the remaining aqueous phase, containing the extracted contaminants by precipitation. This separation is preferably performed in a tube settler which is known per se. The removed sediment is dewatered and possibly subjected to a further washing step. The removed water and the possible wash water are added to said remaining aqueous phase. Use is preferably made of centrifuges for dewatering the purified sediments.

In order to enhance the precipitation of the sediment, flocculation and/or coagulation agents such as polyelectrolytes are preferably added in the flocculator before the precipitation step. Such agents are known per se but only the agents which are active at the pH of the mixture can be used. In a preferred embodiment of the invention, the pH of the mixture of the sediment and the extractant is raised to a pH situated between 2 and 4 and preferably to a pH of about 2.5 after the extraction, in the flocculator, when the extraction is performed under acid conditions. This enables the use of coagulation and/or flocculation agents since no coagulation and/or flocculation agents are known up to now which are still active at lower pH values. In this preferred embodiment, the purification installation is at the same time prevented from being damaged by the action of solutions which are too acid so that no special materials have to be used therefore. The multi step extractor itself is coated for example with a glass coating which is resistant to these low pH values.

After the precipitation step, suspended particles have still to be removed from the remaining aqueous phase in order to prevent the membrane separator from being damaged. To this end, this aqueous phase is fed through parallelly disposed pressure filters, for example sand filters, and then through finer, so-called "cartridge filters". The so filtered aqueous phase is then fed to the membrane separator wherein a reusable first fraction, containing substantially no contaminants, is separated from this aqueous phase.

In the method according to the invention, the sediments to be purified are preferably previously sieved in order to remove particles having a diameter larger than at least 125 ». In a particular embodiment, the so-called rubble having a diameter larger than 40 mm is first removed by sieving. Then, the gravel fraction, having a diameter between 2 and 40 mm, is removed in the first step of a two step drum sieve, possibly by means of said water, in particular with the recycled first fraction. The so removed rubble and gravel are little contaminated all the more since the gravel fraction is already washed in this way. In the second step of the two step drum sieve, coarse sand having a diameter between 125 and 2000 »m is separated, also by means of said water, in particular by means of the cycled first fraction. This coarse sand is very suited to be purified in a purification installation wherein the extraction of the contaminants is enhanced by means of for example a "scrubber" and wherein higher dry matter contents are applied.

## Claims

1. A method for physico-chemically purifying contaminated sediments of a fine texture, such as dredgings and soils of the texture classes loamy sand (S), sandy loam (P), loam (L) and silt (A), wherein
- a mixture is made of said contaminated sediment in water, the pH of which being adjusted to such a pH-value that said water forms an extractant for contaminants present in the sediment;
- said contaminants are extracted by means of this extractant out of the sediment; and
- the sediment is removed and the remaining aqueous phase containing the extracted contaminants is separated in a first fraction containing substantially no contaminants and a second fraction containing extracted contaminants,
characterized in that said mixture of sediment in water has a dry matter content of 5 to 20 % by weight and preferably a dry matter content of about 10 % by weight and the separation in said first and second fraction is performed by membrane separation wherein use is made of a membrane which is permeable for said extractant but substantially impervious for said contaminants.

2. A method according to claim 1, characterized in that the sediment to be purified is sieved so as to remove coarse sand and coarser particles which may be present, with particles having a diameter larger than 125 » being removed in particular by sieving.

3. A method according to claim 2, characterized in that said water is at least partially added to the sediment during said sieving.

4. A method according to any one of the claims 1 to 3, characterized in that the pH of said water is adjusted to a pH lower than 2, and preferably to a pH situated between 0.5 and 1, by adding an acid.

5. A method according to claim 4, characterized in that the pH of the mixture of the sediment and the extractant is raised to a pH situated between 2 and 4, and preferably to a pH of about 2.5, after the extraction.

6. A method according to any one of the claims 1 to 3, characterized in that the pH of said water is adjusted to a pH higher than 10, and preferably to a pH of about 11, by adding a base.

7. A method according to any one of the claims 1 to 6, characterized in that said pH-adjustment is performed in at least two steps, each in a separate compartment of a multi step extractor, the mixture of the sediment and the water being mixed intensively in each of these compartments.

8. A method according to any one of the claims 1 to 7, characterized in that the sediment is separated from said aqueous phase by allowing the sediment to precipitate, preferably in a tube settler, and the separated sediment is dewatered and the extracted water is added to said aqueous phase.

9. A method according to any one of the claims 1 to 8, characterized in that, after the extraction and before the separation of the sediment from said aqueous phase, flocculation and/or coagulation agents such as polyelectrolytes are added to the mixture of the sediment and the water added thereto.

10. A method according to any one of the claims 1 to 9, characterized in that an oxygen containing gas is allowed to bubble up through said mixture in order to cause oily substances to raise to the water surface and these oily substances are removed.

11. A method according to any one of the claims 1 to 10, characterized in that surfactants are added to said mixture before the extraction so as to enhance the extraction of organic contaminants.

12. A method according to any one of the claims 1 to 11, characterized in that steam is injected into the mixture of the sediment and the water added thereto, and/or oxidants are added to this mixture before the extraction, preferably in a first compartment of a multi step extractor.

## Patentansprüche

1. Verfahren zur pysikalisch-chemischen Reinigung von kontaminierten Sedimenten einer feinen Textur, wie Baggeraushübe und Erden der Texturklassen lehmiger Sand (S), sandiger Lehm (P), Lehm (L) und Silt (A), worin
- ein Gemisch des kontaminierten Sediments in Wasser hergestellt wird, wobei dessen pH-Wert auf einen solchen pH-Wert eingestellt wird, daß das Wasser ein Extraktionsmittel für die im Sediment vorhandenen Kontaminationen bildet,
- die Kontaminationen mit diesem Extraktionsmittel aus dem Sediment extrahiert werden, und
- das Sediment entfernt wird und die zurückbleibende wässrige Phase, die die Kontaminationen enthält, in eine erste, im wesentlichen keine Kontaminationen enthaltende Fraktion und in eine zweite, die extrahierten Kontaminationen enthaltende Fraktion getrennt wird,
dadurch gekennzeichnet, daß das Sedimentgemisch in Wasser einen Trockenstoffgehalt von 5 bis 20 Gew.-%, vorzugsweise etwa 10 Gew.-%, aufweist und die Trennung in die erste und zweite Fraktion mittels einer Membrantrennung durchgeführt wird, wobei eine Membran verwendet wird, die für das Extraktionsmittel durchlässig und für die Kontaminationen im wesentlichen undurchlässig ist.

2. Verfahren nach Anspruch 1, dadurch gekennzeichnet, daß das zu reinigende Sediment gesiebt wird, um Grobsand oder gröbere Teilchen, die vorhanden sein können, zu entfernen, wobei Teilchen mit einem Durchmesser von größer als 125 »m insbesondere durch das Sieben entfernt werden.

3. Verfahren nach Anspruch 2, dadurch gekennzeichnet, daß das Wasser mindesten teilweise zu dem Sediment während des Siebens zugegeben wird.

4. Verfahren nach einem der Ansprüche 1 bis 3, dadurch gekennzeichnet, daß der pH-Wert des Wassers durch Zugabe einer Säure auf einen pH-Wert niedriger als 2, vorzugsweise zwischen 0,5 und 1, eingestellt wird.

5. Verfahren nach Anspruch 4, dadurch gekennzeichnet, daß der pH-Wert des Sedimentgemisches und des Extraktionsmittels nach der Extraktion auf einen pH-Wert zwischen 2 and 4, vorzugsweise etwa 2,5, erhöht wird.

6. Verfahren nach einem der Ansprüche 1 bis 3, dadurch gekennzeichnet, daß der pH-Wert des Wassers durch Zugabe einer Base auf eine pH-Wert von höher als 10, vorzugsweise auf etwa 11, eingestellt wird.

7. Verfahren nach einem der Ansprüche 1 bis 6, dadurch gekennzeichnet, daß die pH-Werteinstellung in mindestens zwei Stufen, jeweils in einem abgetrennten Abteil der mehrstufigen Extraktionsvorrichtung, durchgeführt wird, wobei das Sedimentgemisch und das Wasser in jedem dieser Abteile intensiv vermischt werden.

8. Verfahren nach einem der Ansprüche 1 bis 7, dadurch gekennzeichnet, daß das Sediment zur Abtrennung von der wässrigen Phase für das Absetzen, vorzugsweise in einem Sedimentierkolben, stehengelassen wird, das abgetrennte Sediment entwässert wird und das extrahierte Wasser zur wässrigen Phase zugegeben wird.

9. Verfahren nach einem der Ansprüche 1 bis 8, dadurch gekennzeichnet, daß nach der Extraktion und vor der Abtrennung des Sediments von der wässrigen Phase Ausflockungs- und/oder Koagulierungsmittel wie Polyelectrolyte zu dem Sedimentgemisch zugegeben werden und dazu das Wasser zugegeben wird.

10. Verfahren nach einem der Ansprüche 1 bis 9, dadurch gekennzeichnet, daß ein Sauerstoff enthaltendes Gas durch das Gemisch aufsteigen gelassen wird, um ein Anheben öliger Stoffe zur Wasseröberfläche zu bewirken, und diese öligen Stoffe entfernt werden.

11. Verfahren nach einem der Ansprüche 1 bis 10, dadurch gekennzeichnet, daß grenzflächenaktive Mittel zu dem Gemisch vor der Extraktion zugegeben werden, um die Extraktion organischer Kontaminationen zu erhöhen.

12. Verfahren nach einem der Ansprüche 1 bis 11, dadurch gekennzeichnet, daß Dampf in das Sedimentgemisch eingeblasen wird und dazu das Wasser zugegeben wird und/oder Oxidationsmittel zu diesem Gemisch vor der Extraktion, vorzugsweise in einem ersten Abteil einer mehrstufigen Extraktionsvorrichtung zugegeben werden.

## Revendications

1. Procédé pour purifier physico-chimiquement des sédiments souillés d'une fine texture, tels que des produits de dragage et des terres des classes de texture du sable gras (S), du limon sablonneux (P), du limon (L) et de la vase (A), dans lequel :
- on réalise un mélange de ce sédiment souillé dans l'eau, dont le pH est ajusté à une valeur de pH telle que l'eau forme un extracteur pour les impuretés présentes dans le sédiment;
- les impuretés sont extraites au moyen de cet extracteur du sédiment; et
- le sédiment est enlevé et la phase aqueuse restante contenant les impuretés extraites est séparée dans une première fraction ne contenant pratiquement pas d'impuretés et une seconde fraction contenant les impuretés extraites,
caractérisé en ce que le mélange de sédiment dans l'eau précité a une teneur en matière sèche de 5 à 20 % en poids et avantageusement une teneur en matière sèche d'environ 10 % en poids et la séparation dans la première et la seconde fraction est réalisée au moyen d'une séparation par membrane dans laquelle utilisation est faite d'une membrane qui est perméable à l'extracteur mais sensiblement imperméable aux impuretés.

2. Procédé suivant la revendication 1, caractérisé en ce que le sédiment à purifier est tamisé de manière à séparer le sable grossier et les particules plus grossières qui peuvent être présentes, les particules ayant un diamètre plus grand que 125 » étant séparées en particulier par tamisage.

3. Procédé suivant la revendication 2, caractérisé en ce que l'eau est au moins partiellement ajoutée au sédiment au cours du tamisage.

4. Procédé suivant l'une quelconque des revendications 1 à 3, caractérisé en ce que le pH de l'eau est ajusté à un pH inférieur à 2, et avantageusement à un pH situé entre 0,5 et 1, par l'addition d'un acide.

5. Procédé suivant la revendication 4, caractérisé en ce que le pH du mélange du sédiment et de l'extracteur est élevé à un pH situé entre 2 et 4 et avantageusement à un pH d'environ 2,5, après l'extraction.

6. Procédé suivant l'une quelconque des revendications 1 à 3, caractérisé en ce que le pH de l'eau est ajusté à un pH supérieur à 10 et avantageusement à un pH d'environ 11, par l'addition d'une base.

7. Procédé suivant l'une quelconque des revendications 1 à 6, caractérisé en ce que l'ajustement du pH est réalisé en au moins deux étapes, chacune dans un compartiment séparé d'un extracteur à plusieurs étages, le mélange du sédiment et de l'eau étant mélangé intensivement dans chacun de ces compartiments.

8. Procédé suivant l'une quelconque des revendications 1 à 7, caractérisé en ce que le sédiment est séparé de la phase aqueuse en faisant précipiter le sédiment, avantageusement dans un décanteur tubulaire et le sédiment séparé est déshydraté et l'eau extraite est ajoutée à la phase aqueuse susdite.

9. Procédé suivant l'une quelconque des revendications 1 à 8, caractérisé en ce que, après l'extraction et avant la séparation du sédiment de la phase aqueuse, des agents de floculation et/ou de coagulation tels que des polyélectrolytes sont ajoutés au mélange du sédiment et de l'eau ajoutée à celui-ci.

10. Procédé suivant l'une quelconque des revendications 1 à 9, caractérisé en ce qu'on fait barboter un gaz contenant de l'oxygène dans le mélange susdit afin de faire monter les substances huileuses à la surface de l'eau et ces substances huileuses sont séparées.

11. Procédé suivant l'une quelconque des revendications 1 à 10, caractérisé en ce que des agents tensio-actifs sont ajoutés au mélange précité avant l'extraction de manière à accroître l'extraction des impuretés organiques.

12. Procédé suivant l'une quelconque des revendications 1 à 11, caractérisé en ce que l'on injecte de la vapeur dans le mélange du sédiment et de l'eau ajoutée à celui-ci et/ou on ajoute des oxydants à ce mélange avant l'extraction, avantageusement dans un premier compartiment d'un extracteur à plusieurs étages.
